# EUROPÄISCHE PATENTANMELDUNG

(11) **EP 0 601 213 A1**
(43) Veröffentlichungstag der Anmeldung: **15.06.1994**
(21) Anmeldenummer: 92118464.4
(22) Anmeldetag: 29.10.1992
(51) Int. Cl.: B25J 5/00, B25J 9/12, G01N 35/06

(54) **Vorrichtung zum Transportieren von Waren**

(71) Anmelder: Hamilton Bonaduz AG, CH-7402 Bonaduz (CH)
(72) Erfinder: Hofstetter, Meinrad F., CH-7012 Felsberg (CH)
(74) Vertreter: Blum, Rudolf Emil Ernst

(57) **Zusammenfassung**

Die Transporteinheiten (5) sind magnetisch an einer plattenförmigen Tragplatte (7) aufgehängt. Sie werden von einem Steuergerät (20) über einen zentralen Sender/Empfänger (23) drahtlos gesteuert. Die Transporteinheiten (5) sind in x- und y- verfahrbar und das Warenaufnahmeglied in Form einer Pipette (6) in der z-Richtung verschiebbar. Jede Transporteinheit (5) weist eine eigene Energiequelle auf, die in einer Aufladestation (19) nachladbar ist. Damit können mehrere Transporte von einer Ausgangsstelle, z.B. Gefässen (2) zu Zielstellen, z.B. Reagenziengefässen (3) unabhängig voneinander durchgeführt werden, womit die Anzahl der möglichen Transporte pro Zeiteinheit sehr hoch ist.

## Beschreibung

Die vorliegende Erfindung betrifft eine Vorrichtung zum Transportieren von Waren in einem Arbeitsfeld von einer Ausgangsstelle zu einer Zielstelle, welche Stellen auf einem mindestens annähernd plattenförmigen Träger angeordnet sind, und mit einer Anzahl unabhängig voneinander bewegbaren Transporteinheiten mit einem Warenaufnahmeglied zum Aufnehmen, Tragen und Abgeben einer jeweiligen Ware, welches Warenaufnahmeglied durch eine Bewegung seiner Transporteinheit in mindestens der x- und y-Richtung verschiebbar ist.

Pipettier- und Analyseautomaten, wie sie z.B. in den chemischen und human- oder veterinärmedizinaltechnischen Labors vorkommen, benötigen für die Ausführung ihrer Aufgaben Transporteinheiten, welche beispielsweise Flüssigkeiten, Festkörper, Gefässe, Behälter etc. innerhalb einem gegebenen Arbeitsfeld bei einer Ausgangsstelle aufnehmen, zu einer Zielstelle transportieren und dort abgeben. Der Transport dieser Waren erfolgt grundsätzlich durch ein Warenaufnahmeglied einer jeweiligen Transporteinheit, beispielsweise eine Hohlnadel, Pipettierspitze oder einen Greifmechanismus, welches Warenaufnahmeglied durch ihre Transporteinheit, beispielsweise einem x-y-z-Transportarm oder Dreharm von der Ausgangsstelle zur Zielstelle gebracht, bei welcher die jeweilige Waare abgegeben wird.

Aus ökonomischen und anderen Gründen muss dieser Transport so schnell wie möglich erfolgen, weil er grundsätzlich den Durchsatz, die Wirksamkeit der gesamten Vorrichtung bestimmt, bzw. begrenzt. Der Beschleunigung während den drei Einzelschritten Aufnahme, Fahrstrecke und Abgabe sind jedoch physikalische Grenzen gesetzt, bei deren Ueberschreitung die Präzision und Richtigkeit des Transports ungenügend wären.

Wenn nun bei der Arbeit solcher Vorrichtungen ein höherer Durchsatz gefordert ist, müssen mehrere Transporte gleichzeitig und parallel zueinander erfolgen. Bei bekannten solchen Vorrichtungen, d.h. Pipettier- und Analyseautomaten, wird diese Forderung gelöst, indem entweder mehrere Warenaufnahmeglieder (Hohlnadeln, Greife, Pipettierspitzen) mit einer Transporteinheit (Bewegungsarm) verbunden werden, oder indem mehrere solcher Bewegungsarme nebeneinander oder ineinander angeordnet arbeiten. Alle entsprechend bekannten Lösungen weisen gemeinsam denselben Nachteil auf, nämlich, dass der Freiheitsgrad der Transportrichtungen mindestens in einer Richtung stark eingeschränkt ist. Werden z.B. mehrere Hohlnadeln in einer Reihe angeordnet mit einem x-y-Bewegungsarm verbunden, kann die Reihenfolge dieser Hohlnadeln entlang des Bewegungsarmes nicht vertauscht werden und folglich muss die Anordnung der Aufnahmegefässe bei der Ausgangsstelle mit der Anordnung der Abgabegefässe bei der Zielstelle mindestens in ihrer Folge übereinstimmen.

Werden mehrere x-y-z-Bewegungsarme eingesetzt, können diese nicht über- oder untereinander durchfahren, ohne das Arbeitsfeld der einzelnen Transporte in unzulässiger Art und Weise einzuschränken. Deshalb sind bei praktischen Ausführungen nur Vorrichtungen mit maximal zwei x-y-z-Bewegungsarmen bekannt, die jedoch in x-Richtung auf derselben Achse laufen und sich somit überhaupt nicht überkreuzen können.

Hier will die Erfindung Abhilfe schaffen. Die Erfindung, wie sie in den Ansprüchen gekennzeichnet ist, löst die Aufgabe, eine Vorrichtung zum Transportieren von Waren zu schaffen, bei welcher die einzelnen Transporteinheiten mit Selbstfahrantrieben ausgerüstet sind, die an einer Tragplatte hängend angeordnet sind und deren Daten- und Energieversorgung drahtlos erfolgt.

Die durch die Erfindung erreichten Vorteile sind im wesentlichen darin zu sehen, dass sich die Transporteinheiten unabhängig voneinander innerhalb eines vorgegebenen Arbeitsfeldes in x- und y-Richtung frei bewegen können, und dass ihre Warenaufnahmeglieder sich unabhängig in z-Richtung frei bewegen können. Damit können gleichzeitig mehrere Transporte in einem Arbeitsfeld von beliebigen Ausgangsstellen zu beliebigen Zielstellen unabhängig voneinander ausgeführt werden, womit die Anzahl möglicher Transporte pro Zeiteinheit erheblich erhöht wird.

Im folgenden wird die Erfindung anhand von Ausführungswegen darstellenden Zeichnungen näher erläutert.
Figur 1 zeigt schematisch eine gemäss der Erfindung ausgebildete Vorrichtung, wobei zwei Ausführungen von Transporteinheiten dargestellt sind,
Figur 2 schematisch eine Transporteinheit, die teilweise aufgeschnitten dargestellt ist, und
Figur 3 eine Anordnung von Leiterbahnen und eine Gebereinrichtung in einer Transporteinheit zur Ermittlung und Anzeige der jeweiligen Position der Transporteinheit.

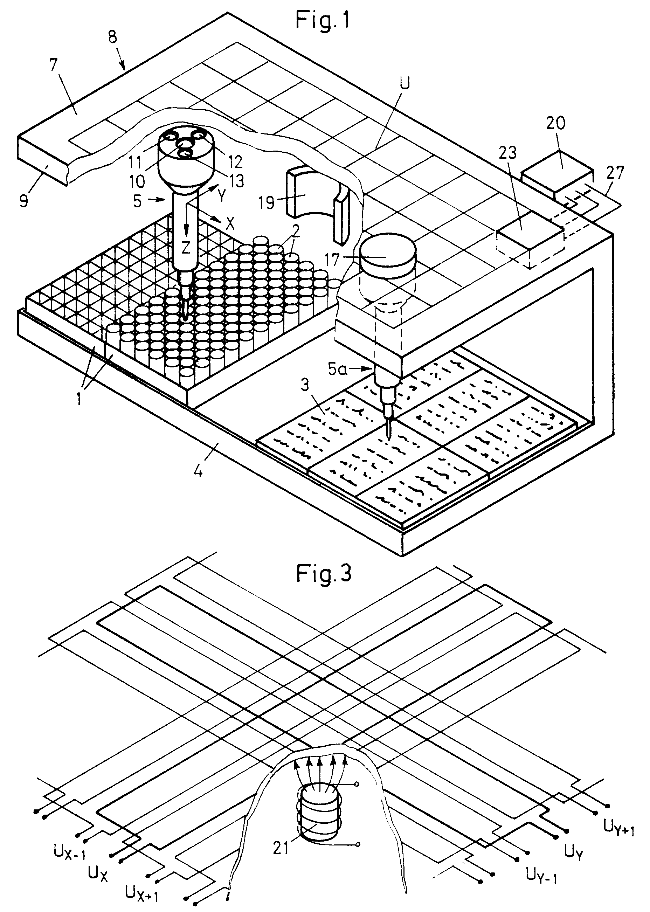

Die in der Figur 1 beispielsweise gezeigte Ausführung der erfindungsgemässen Erfindung weist einen plattenförmigen Träger 4 auf, auf welchem links eine Aufnahmeplatte 1 bzw. Aufnahmekorb für Gefässe 2 mit Proben angeordnet ist. Die Gefässe 2 sind lediglich als Beispiele einer Ausgangsstelle zu betrachten, bei welcher eine jeweilige Ware aufgenommen und davon weg transportiert werden muss. Bei der rechten Seite der Figur sind als Zielstelle 3 beispielsweise Gefässe mit Reagenzien vorhanden. Ueber dem plattenförmigen Träger 4 ist eine Tragplatte 7 angeordnet, die mindestens annähernd parallel zum plattenförmigen Träger 4 verläuft. Im gezeichneten Beispiel ist die Tragplatte 7 über eine Wandplatte 26 mit dem plattenförmigen Träger 4 verbunden.

Die Tragplatte 7 weist eine obere Seite 8 und eine untere Seite 9 auf, wobei die untere Seite 9 als Fahrbahn für die Transporteinheiten 5, 5a dient, welche weiter unten noch im einzelnen beschrieben werden. Die Tragplatte 7 enthält in der Figur 1 rein schematisch eingezeichnete Leiterbahnen U, welche koordinatennetzförmig angeordnet sind, und welche anhand der Figur 3 im einzelnen beschrieben sein werden. Die Bezugsziffer 20 bezeichnet das Steuergerät der gesamten Vorrichtung, welches über Leiter 27 einerseits mit den Leiterbahnen U und andererseits einem zentralen Sender/Empfänger 23 in Verbindung steht, welche mit der Tragplatte 7 verbunden ist. Der gezeichnete Ort des zentralen Senders/Empfängers 23 ist rein beispielsweise, dieses Gerät könnte auch bei anderen Stellen der Vorrichtung angeordnet sein. Jede Transporteinheit 5, 5a trägt ein Warenaufnahmeglied 6, hier in der Form einer Pipette. Aus der Figur 1 ist ersichtlich, dass sich die Transporteinheiten in x- und y-Richtung bewegen können und die Pipetten 6 zusätzlich in der z-Richtung.

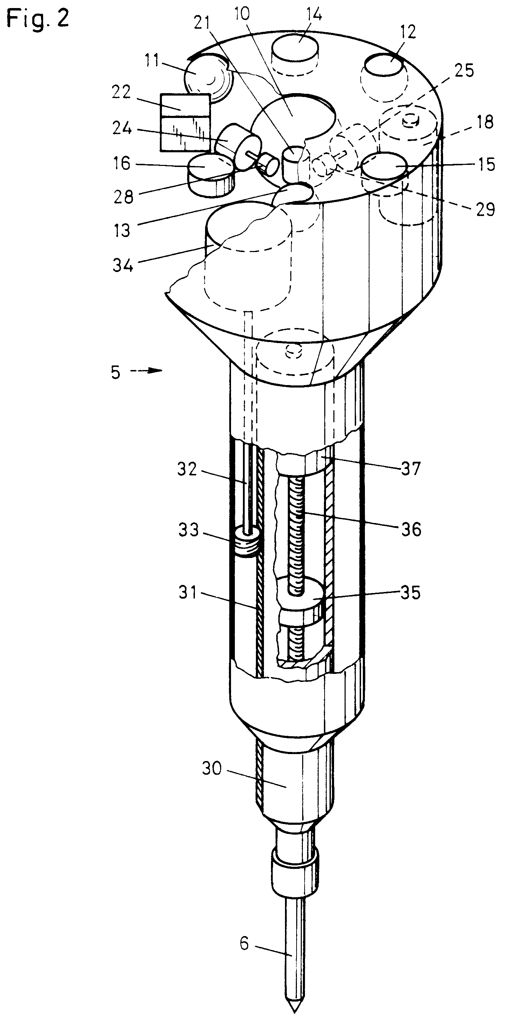

In der Figur 2 ist schematisch eine beispielsweise Ausführung einer Transporteinheit 5 dargestellt, bei welcher Ausführung die Tragplatte 7 aus einem ferromagnetischen Werkstoff besteht.

Die Transporteinheit 5 weist eine eigene, unabhängige Energieversorgung mit einem nachladbaren Energiespeicher 18, einem Akkumulator, auf. Dieser Akkumulator 18 wird in einer Aufladestation 19 (siehe Figur 1) jeweils nachgeladen, wobei beim Erreichen eines vorgegebenen, unteren Ladungswertes des Akkumulators 18 sich die Transporteinheit 5 automatisch zum Nachladen in die Aufladestation 19 bewegt.

Bei der ebenflächigen Unterseite ist die Transporteinheit 5 mit drei Lagerkörpern in Form von Kugeln 11, 12, 13 ausgerüstet, über welche sie sich auf der unteren Seite 9 der Tragplatte 7 abstützt. Weiter sind bei der Oberseite der Transporteinheit 5 drei Magnetglieder 14, 15, 16 vorhanden, welche Dauer- oder Elektromagnete sein können, durch welche Magnete eine gegen die Tragplatte 7 gerichtete Zugkraft auf die Transporteinheit 5 ausgeübt wird, so dass diese an der unteren Seite 9 der Tragplatte 7 hängend verfahrbar gehalten ist. Im Falle von Elektromagneten 14, 15, 16 werden diese offensichtlich vom Energiespeicher 18 her versorgt.

Im Zentrum der Oberseite der Transporteinheit 5 ist eine getriebene Kugel 10 angeordnet, welche ebenfalls unter Druckausübung an der unteren Seite 9 der Tragplatte 7 anliegt. Zum Antrieb der Kugel 10 sind zwei Elektromotoren 24, 25 vorhanden, welche über Reibräder 28, 29 auf die Kugel 10 antreibend einwirken. Diese Reibräder 28, 29 stehen im rechten Winkel zueinander und es ist offensichtlich, dass die Kugel 10 derart getrieben werden kann, dass die Transporteinheit 5 in beliebiger x-y-Richtung verschoben werden kann. Die Elektromotoren 24, 25 erhalten ihre Energie wieder vom Energiespeicher 18.

Die Bezugsziffer 21 bezeichnet einen als Gebereinrichtung ausgebildeten Elektromagneten 21, mittels welchem die Position der Transporteinheit 5 an der unteren Seite 9 der Tragplatte 7 ermittelt wird, wie weiter unten noch näher erklärt sein wird.

In der Transporteinheit 5 ist ein Warenaufnahmeglied, hier als Beispiel eine Wegwerfpipette 6 zum Aufnehmen, Transportieren und Abgeben einer genau bemessenen Menge von Flüssigkeit angeordnet. Diese Pipette 6 ist lösbar mit einem Tragzylinder 30 verbunden, der einen mit Zähnen ausgebildeten Mantelbereich 31 aufweist. Eine von einer Welle 32 getragene Schnecke 33 kämmt mit dem gezahnten Mantelbereich 31. Die Welle 32 ist mit einem Antriebsmotor 34 verbunden. Dieser Antriebsmotor 34, der seine Energie ebenfalls vom Energiespeicher 18 bezieht, dient zum Absenken und Anheben des Tragzylinders 30 und insbesondere der Pipette 6 zur Aufnahme bzw. Abgabe der zu transportierenden Flüssigkeit.

Im Tragzylinder 30 ist ein Dosierkolben 35 mit einem Innengewinde angeordnet, der auf einer Gewindespindel 36 angeordnet ist, die mit einem Dosierhubantriebsmotor 37 verbunden ist, der seine Energie ebenfalls vom Energiespeicher 18 bezieht. Mit dieser Anordnung lässt sich eine genau begrenzte Menge von Flüssigkeit aus den jeweiligen Gefässen 2 aufnehmen und bei den Reagenziengefässen 3 abgeben.

Bei der rechten Seite der Figur 1 ist eine Variante der Transporteinheit gezeichnet, die mit 5a identifiziert ist. Auf der oberen Seite 8 der bei dieser Variante aus einem nichtferromagnetischen Stoff bestehenden Tragplatte 7 ist ein Gehäuse 17 angeordnet. Bei dieser Ausführung sind die Magnetglieder 14, 15, 16, in diesem Gehäuse 17 angeordnet und wirken durch die Tragplatte 7 auf die Transporteinheit 5, um auf diese eine Zugkraft auszuüben, welche sie in Berührung mit der unteren Seite 9 der Tragplatte 7 hält. Weiter ist die Antriebsanordnung, welche die getriebene Kugel 10, die Antriebsmotoren 24, 25 und die Reibräder 28, 29 enthält, ebenfalls in diesem Magnetkörperträger 17 angeordnet. Weiter kann auch der Geber 21, der Elektromagnet in diesem Magnetkörperträger 17 angeordnet sein.

Zurückkehrend zur erstbeschriebenen Ausführung der Transporteinheit 5 gemäss Figur 2 ist weiter in der Transporteinheit 5 ein Sender/Empfänger 22 angeordnet. Dieser wirkt mit dem zentralen Sender/Empfänger 23 zusammen, der seine Operationsbefehle vom Steuergerät 20 erhält. Die Verbindung zwischen dem zentralen Sender/Empfänger 23 und den jeweiligen Sendern/Empfängern 22 der mehreren Transporteinheiten 5 erfolgt bidirektional drahtlos bzw. mittels Radio/ oder Lichtwellen zur Uebermittlung des jeweiligen Transportauftrages.

Die Information über die Positionen der verschiedenen Transporteinheiten 5 werden folgendermassen dem Steuergerät 20 zugeführt, welches sämtliche Bewegungen aller Transporteinheiten 5 koordiniert und steuert.

Es wird auf die Figur 3 hingewiesen. In dieser sind die in der Figur 1 allgemein mit U bezeichneten Leiterbahnen im Detail dargestellt. Auf der unteren oder oberen Seite (abhängig von der jeweiligen Ausführung der Transporteinheit 5) ist eine Koordinateneinrichtung angeordnet, welche aus einer in Multilayertechnik aufgebauten Leiterplatte oder Folie besteht. Die einzelnen Leiterbahnen bilden Schleifen, in der Figur 3 mit U_{y-1}, U_{y}, U_{y+1} und Uₓ₋₁, Uₓ, Uₓ₊₁ identifiziert. Die einzelnen schleifenförmigen Leiterbahnen überlappen sich in der y-Richtung und der x-Richtung, d.h., die in y-Richtung verlaufenden Schleifen überlappen sich und die in der x-Richtung verlaufenden Schleifen überlappen sich ebenfalls. Weiter kreuzen sich die y-Schleifen und die x-Schleifen. Zu bemerken ist, dass die Breite der Schleifen in der Figur 3 aus Gründen der Uebersichtlichkeit übertrieben gross dargestellt ist.

Der Elektromagnet 21, welcher in der Transporteinheit 5 angeordnet ist, erzeugt kontinuierlich ein magnetisches Wechselfeld B. Die Identifikation der jeweiligen Transporteinheit 5 erfolgt durch Modulation des Wechselfeldes, das durch den jeweiligen Elektromagneten 21 erzeugt wird.

Durch das Wechselfeld wird nun in den zwei sich unmittelbar über dem Elektromagneten 21 befindlichen y- und x-Schleifen aufgrund des senkrecht zur durch die jeweiligen Schleifen umspannten Fläche diese durchdringenden Flusses eine Spannung induziert, welche bei den Leitern 27 abgegriffen und dem Steuergerät 20 zugeführt wird. Die jeweiligen y- und x-Schleifen mit der höchsten induzierten Spannung beschreiben somit die Koordinaten der Position der jeweiligen Transporteinheit 5.

Gemäss der Figur 3 befindet sich die Transporteinheit 5 bei einer Stelle, welche den Koordinaten Uy und Ux entspricht. In den benachbarten, überlappenden Schleifen, d.h. U_{y-1}, U_{y+1} und Uₓ₋₁, Uₓ₊₁ werden ebenfalls Spannungen induziert. Aus dem Verhältnis der bei den Schleifen U_{y} und Uₓ induzierten, höchsten Spannungen zu den in den besagten benachbarten Schleifen induzierten Spannungen lässt sich nun im Steuergerät 20 die genaue Stellung der jeweiligen Transporteinheit 5 innerhalb des einzelnen Koordinatenquadranten ermitteln.

Mit dieser Transportvorrichtung ist es also möglich, mehrere Transporte von Waren ohne eine gegenseitige Veränderung in x-, y- und z-Richtung völlig unabhängig voneinander durchzuführen. Weiter können ohne weiteres einer gegebenen Anlage weitere Transporteinheiten 5 hinzugefügt oder Transporteinheiten 5 abhängig vom jeweiligen Auftrag entfernt werden.

Das Steuergerät 20 weist eine Anordnung von leistungsfähigen Microprozessoren auf. Damit werden aus einer vorgegebenen Arbeitsliste die Transportaufgaben mit der Ausgangsstelle und der Zielstelle der einzelnen Transporteinheiten 5 berechnet. Die einzelnen Fahrwege der Transporteinheiten 5 mit Postion, Geschwindigkeit und Fahrrichtung werden im Steuergerät 20 kontinuierlich optimiert und in dieser Weise werden Kollisionen verhindert. Die an die Transporteinheiten 5 zu übermittelnden Signale beinhalten kodierte Adressen und die jeweils adressierte Transporteinheit muss den Empfang quittieren. Es erfolgt also ein bidirektionaler Datentransfer.

## Patentansprüche

1. Vorrichtung zum Transportieren von Waren in einem Arbeitsfeld von einer Ausgangsstelle (1, 2) zu einer Zielstelle (3), welche Stellen (1, 2; 3) auf einem mindestens annähernd plattenförmigen Träger (4) angeordnet sind, und mit einer Anzahl unabhängig voneinander bewegbaren Transporteinheiten (5; 5a) mit jeweils einem Warenaufnahmeglied (6), welches Warenaufnahmeglied (6) durch eine Bewegung der Transporteinheit (5; 5a) in mindestens der x- und y-Richtung verschiebbar ist, dadurch gekennzeichnet, dass jede Transporteinheit (5; 5a) einen Selbstfahrantrieb (10, 24, 25, 28, 29) aufweist und über dem plattenförmigen Trager (4) eine mindestens annähernd parallel dazu verlaufende Tragplatte (7) für die Transporteinheiten (5; 5a) angeordnet ist, welche Tragplatte (7) eine obere (8), vom plattenförmigen Träger (4) abgekehrte und eine untere, dem plattenförmigen Träger (4) zugekehrte Seite aufweist, wobei die Transporteinheiten (5; 5a) über Lagerkörper (10-13) durch eine Zugkraft in Berührung mit der unteren Seite (9) der Tragplatte (7) an derselben hängend und durch den Selbstfahrantrieb (10, 24, 25, 28, 29) verschiebbar gehalten sind.

2. Vorrichtung nach Anspruch 1, dadurch gekennzeichnet, dass jeder Transporteinheit mindestens ein Magnetglied (14, 15, 16) zugeordnet ist, dessen Magnetfeld die zum Halten der Transporteinheit (5; 5a) an der unteren Seite (9) der Tragplatte (7) notwendige Zugkraft bewirkt.

3. Vorrichtung nach Anspruch 1 oder 2, dadurch gekennzeichnet, dass jede Transporteinheit (5; 5a) eine eigene Energieversorgung mit einem nachladbaren Energiespeicher (18) enthält und mindestens bei der unteren Seite (9) der Tragplatte (7) eine Aufladestation (19) angeordnet ist, wobei jede Transporteinheit (5) zum Nachladen ihres Energiespeichers (18) in die Aufladestation (19) verfahrbar ist.

4. Vorrichtung nach einem der Ansprüche 1 - 3, dadurch gekennzeichnet, dass das jeweilige Warenaufnahmeglied (6) in der Transporteinheit (5; 5a) in der z-Richtung verschiebbar gelagert und bewegbar ist.

5. Vorrichtung nach einem der Ansprüche 1 - 4, dadurch gekennzeichnet, dass die Tragplatte koordinatennetzförmig angeordnete Leiterbahnen (U) aufweist, die mit einem Steuergerät (20) zum Betrieb der Transporteinheiten verbunden sind, und dass jede Transporteinheit (5; 5a) eine über ein Magnetfeld auf die Leiterbahnen (U) einwirkende Gebereinrichtung (21) aufweist, so dass über die Leiterbahnen (U) in dem Steuergerät (20) die Positionsangabe der jeweiligen Transporteinheit (5) erfolgt.

6. Vorrichtung nach einem der Ansprüche 1 - 5, dadurch gekennzeichnet, dass jede Transporteinheit (5; 5a) einen Sender/Empfänger (22) aufweist und das Steuergerät (20) mit einem zentralen Sender/Empfänger (23) verbunden ist, welcher Operationsbefehle des Steuergerätes (20) drahtlos dem Sender/Empfänger (22) einer jeweiligen Transporteinheit (5; 5a) übermittelt.

7. Vorrichtung nach einem der Ansprüche 1 - 6, dadurch gekennzeichnet, dass jede Transporteinheit (5; 5a) über Kugeln (10-13) an der unteren Seite (9) der Tragplatte (7) abgestützt ist, und dass der Selbstfahrantrieb eine weitere Kugel (10) und zwei dieselbe treibende Antriebseinheiten (24, 25, 28, 29) zum richtungsgesteuerten Antreiben derselben aufweist.

8. Vorrichtung nach Anspruch 6, dadurch gekennzeichnet, dass der zentrale Sender/Empfänger (23) und die Sender/Empfänger (22) der Transporteinheiten (5) für eine Signalübermittlung mittels Radio-, Licht- oder Infrarotwellen ausgebildet sind.

9. Vorrichtung nach einem der Ansprüche 2 - 8, dadurch gekennzeichnet, dass die jeweiligen Magnetglieder (14-16) einen Dauer- oder Elektromagneten aufweisen.

10. Vorrichtung nach einem der Ansprüche 5 - 9, dadurch gekennzeichnet, dass die Gebereinrichtung (21) der Transporteinheit (5; 5a) einen Elektromagneten aufweist und die Leiterbahnen (U) als einzelne Schleifen (Uₓ₋₁, Uₓ, Uₓ₊₁; U_{y-1}, U_{y}, U_{y+1}) ausgebildet sind, wovon eine erste Gruppe (Uₓ₋₁, Uₓ, Uₓ₊₁) aus einer Anzahl sich uberlappender, in der x-Richtung verlaufenden Schleifen und eine zweite Gruppe (U_{y-1}, U_{y}, U_{y+1}) aus einer weiteren Anzahl sich überlappender, in der y-Richtung verlaufenden Schleifen besteht, wobei der Elektromagnet (21) ein auf die Leiterbahnen einwirkendes Wechselfeld erzeugt, um in denselben eine Spannung zu induzieren.

11. Vorrichtung nach einem der Ansprüche 1 - 10, dadurch gekennzeichnet, dass die jeweiligen Magnetglieder (14-16) in der Transporteinheit (5) angeordnet sind und die Tragplatte (7) ferromagnetisch ist.

12. Vorrichtung nach einem der Ansprüche 1 - 10, dadurch gekennzeichnet, dass die jeweiligen Magnetglieder (14-16) in einem auf der Tragplatte (7) verschiebbar angeordneten Gehäuse (17) angeordnet sind und die Tragplatte (7) nichtferromagnetisch ist.
